# EUROPÄISCHE PATENTSCHRIFT

(11) **EP 2 039 317 B1**
(45) Veröffentlichungstag und Bekanntmachung des Hinweises auf die Patenterteilung: **31.08.2011**
(21) Anmeldenummer: 08015614.4
(22) Anmeldetag: 05.09.2008
(51) Int. Cl.: A61C 5/06, G01F 11/02

(54) **Mischkapsel für Zweikomponentenmaterial**
Mixing capsule for two-component material
Capsule de mélange pour matériau à deux composants

(30) Priorität: 20.09.2007 DE 102007045154
(43) Veröffentlichungstag der Anmeldung: 25.03.2009
(73) Patentinhaber: Heraeus Kulzer GmbH, 63450 Hanau (DE)
(72) Erfinder: Winterhoff, Jörg, 63450 Hanau (DE)
(74) Vertreter: Kühn, Hans-Christian

(56) Entgegenhaltungen:
- US-A- 5 396 986
- US-A1- 2001 055 238
- US-A1- 2003 047 468

## Beschreibung

Die Erfindung betrifft eine Mischkapsel für Zweikomponentenmaterial, insbesondere zur Abgabe von Dentalzement in Einzeldosen. Eine solche Kapsel ist in der US2003/0047468 offenbart.

Zahnimplantate dienen als Träger von Zahnersatz und übernehmen die Funktion künstlicher Zahnwurzeln. Sie werden im Allgemeinen in den Kieferknochen (enossale Implantate) eingedreht (über ein Schraubgewinde) oder einfach eingesteckt. Sie verbinden sich innerhalb von 3 bis 6 Monaten mit dem umgebenden Knochen zu einer festen, belastungsfähigen Trägereinheit (Osseointegration).

Bei vielen bekannten Dentalimplantatsystemen wird der Aufbau (Abutment), der schließlich den endgültigen Zahnersatz trägt, mit Schraubverbindungen am Implantat fixiert. Es gibt aber schraubenfreie Systeme, bei denen Implantat und Aufbau mittels Clip- oder auch Schnappverbindungen verbunden werden (IQ:NECT®, Heraeus Kulzer GmbH, WO0180769A1, WO0180768A1, WO0180766A1, WO0180767A1). Dies hat den Vorteil, dass in den einzelnen Stadien der Behandlung der jeweilige Aufbau mit Einheilkappe oder Abdruckpfosten leicht vorläufig fixiert und ebenso leicht wieder vom Implantat getrennt werden kann. Allerdings ist für den endgültigen Aufbau eine dauerhafte Verbindung sicherzustellen.

Der finale Aufbau wird daher nach dem Stand der Technik mittels einer speziell entwickelten Dosierspritze (WO2006018148A2) einzementiert. Der Zement wird vorgemischt und eine vordefinierte Menge davon vor dem Einsetzen des Aufbaus in den dafür vorgesehenen Hohlraum des Implantats gegeben. Beim Einsetzen wird der Zement zwischen Implantat und Aufbau gleichmäßig verteilt, füllt die Spalträume zwischen Implantat und Aufbau weitgehend aus, und wird anschließend gehärtet. Die Anmischung des Zementes sowie die Applikation muss dabei absolut frei von Lufteinschlüssen erfolgen, da Luftblasen sowohl die korrekte Dosierung als auch die Festigkeit des aushärtenden Zements inakzeptabel beeinflussen würden. Als Vorteil ergibt sich, dass im Vergleich zu verschraubten Implantaten ein geringeres Volumen für Bakterien vorhanden ist. Bekannte Probleme, wie Schraubenbrüche oder Verspannungen, sind ebenfalls ausgeschlossen.

Bei der derzeit verwandten Dosierspritze handelt es sich um ein aufwendiges, sehr kompliziert zu bedienenden Mehrfachdosiersystem, in das zuvor der mittels Mischkanülen angemischte Zement gegeben wird. Als Nachteil können insbesondere das Vormischen des Zements und nötige Reinigung der Dosierspritze empfunden werden. Außerdem ist die Dosierspritze ein hochtechnisiertes und entsprechend teures Gerät.

Aufgabe der Erfindung ist demnach das Bereitstellen eines sichereren, einfacheren und preisgünstigen Dosiersystems.

Es wurde gefunden, dass das geschilderte Dosiersystem durch eine überraschend einfach zu handhabende und kostengünstige Vorrichtung ersetzt werden kann.

Die Erfindung betrifft daher eine Mischkapsel nach Anspruch 1, mit der sowohl das Anmischen als auch das Dosieren des Zements erfolgen kann. Vorteilhafte Ausgestaltungen und Verwendungen sind den weiteren Ansprüchen zu entnehmen.

Die Funktion der einzelnen Bauteile in bevorzugten Ausgestaltungen wird in den folgenden Abschnitten a) - d) erläutert:
a) Die Mischkapsel weist zwei gegeneinander drehbare zylindrische Formkörper/Korpusbestandteile mit (bezogen auf den gemeinsamen Querschnitt) je einem exzentrisch eingelassene Reservoir für die Anmischkomponenten auf. Im Auslieferungszustand sind die Teile so gegeneinander gedreht - und vorzugsweise mit einem leichten Einrasten gesichert -, dass die beiden Komponenten nicht miteinander in Kontakt kommen (Auslieferungsposition). Der Querschnitt der Reservoirs kann verschieden gestaltet sein, z. B. als Kreis, Oval, Ellipse, Raute, Trapez, Parallelogramm, Vieleck, Rechteck oder Quadrat.
   Durch entsprechendes Verdrehen der beiden zylindrischen Korpusbestandteile zueinander (vorzugsweise mit einem leichten Einrasten in Endposition) können die Reservoirs kongruent in Reihe gebracht werden, so dass die Zementkomponenten miteinander in Kontakt kommen und durch das Rütteln des Praxisanmischgerätes vermischt werden können (Mischposition).
b) Die Reservoirs sind zweckmäßig zum Befüllen mit den Komponenten eines Zweikomponentenmaterials ohne Lufteinschlüsse vorgesehen. Je nach zu mischendem Material können eine oder mehrere Mischkugeln für die Kammern vorgesehen sein. Wenn vorhanden, müssen diese Mischkugeln bereits mit den Komponenten in den Reservoirs eingefüllt sein. Entsprechend ist zur Gewährleistung eines korrekten Anmischverhältnisses deren Volumen in die Volumenbemessung der Reservoirs einzurechnen.
c) Ein Auspress-Kolben fährt bei der Applikation in das hintere zweite Reservoir und verdrängt dort entsprechend seiner Dimensionierung in den Parametern Hubweg und Durchmesser (berechnet nach dem gewünschten Dosiervolumen) die entsprechende Menge angemischten Zement, so dass dieser, an der Auslaßöffnung des vorderen ersten Reservoirs, bevorzugt durch eine ausgeschwenkte Applikationskanüle am vorderen Teil der Kapsel, austreten kann.
   Der Hubweg wird durch geeignete Ausgestaltung des Bauteils bestimmt, so dass verschiedene praxisübliche Ausdrückinstrumente zum Einsatz kommen können.
   Da der Kolben exzentrisch liegt, die meisten praxisüblichen Auspressinstrumente aber zentrisch drücken, weist der Kolben vorzugsweise zur Verhinderung eines Verkantens eine entsprechende Ausgestaltung und Führung auf, z.B. einen zweiten, parallelen Führungskolben.
   Durch geeignete Ausgestaltung des Kolbensystems und der Führung, vorzugsweise durch ein leichtes Einrasten in der Auslieferungsposition, wird eine Beweglichkeit des Kolbens erst durch den Druck mittels des Applikators, nicht jedoch durch Transporterschütterungen oder den Anmischvorgang selbst, bewirkt.
d) Eine schwenkbare Applikationskanüle mit Drehventil zum vorderen ersten Reservoir hin nimmt das aus dem Auslass des vorderen ersten Reservoirs ausgepresste Material auf. Dieser wird zweckmäßig beim Ausschwenken der Kanüle von Anmisch- in Applikationsposition geöffnet. Der Eingang zur Kanüle bzw. der Auslass des vorderen ersten Reservoirs ist vorteilhafterweise so gestaltet, dass eine eventuell davor liegende Mischkugel ihn bei der Zementapplikation nicht blockieren kann.

In der Praxis werden häufig nur extrem kleine Mengen gebraucht. Diese können um 10 mg oder zwischen 5 und 10 mg liegen; im Fall des IQNECT® Implantat-Systems sind es 6,2 mg +/- 5%. Dies trägt dem Volumen Rechnung, das vom Zement ausgefüllt wird. Das führt bei der Misch - und Dosiervorrichtung dazu, dass eine größere Menge anzumischen ist, da sich entsprechend kleine Mengen nicht sicher anmischen lassen. Entsprechend verbleibt nach der Dosierung eine gewisse Menge des angemischten Materials in der Kapsel, die damit zu entsorgen ist.

Die Vorteile des Zusammenfassens von Anmischen und Dosierung in einer Einheit sind
- erheblicher Gewinn an Zeit und insbesondere Sicherheit bei der Abutmentzementierung;
- blasenfreies und kontaminationsfreies Anmischen von Materialien; die lufteinschlussfreie Anmischung kann das System auch für andere dentale Anmischanwendungen interessant machen;
- Kompatibilität mit praxisüblichen Anmischgeräten und Applikationsinstrumenten. Zum Anmischen können praxisübliche Kapsel Anmischgeräte benutzt werden. Zum Ausdrücken der Zementmenge können alle praxisüblichen Applikatoren für Kapselzemente verwendet werden.
- Ermöglichung erheblich preisgünstigerer Einzelzementierungen;
- durch das Verdrehen der Kapseln entsteht keine Volumenveränderung;
- es müssen keine Trennmembranen o.ä. durchstoßen werden. Kontaminationen des Mischgutes bleiben so aus.

Die erfindungsgemäße Mischkapsel ist in der Dosierform bevorzugt zur Verwendung mit dem IQ:NECT® Implantatsystem für die Single Dose Abutmentzementierung einsetzbar.

Bestehende Mischkapseln für dentale Zemente vermögen folgende Kriterien nicht zu erfüllen:
- Luftfreies Anmischen der Komponenten;
- Sicherstellung der Reinheit des Anmischgutes, da Teile durchstoßener Trennmembranen in den Zement geraten können;
- Funktion der Präzisionsdosierung.

Zur Linderung dieser Nachteile wurden z. B. besondere Anmischgeräte entwickelt, bei denen die Lufteinschlüsse in den Kapselzementen wieder größtenteils auszentrifugiert werden sollen. Solche Maßnahmen brauchen bei den erfindungsgemäßen Kapseln nicht ergriffen zu werden.

Somit ergibt sich als weitere Verwendungsmöglichkeit der Einsatz zum Anmischen und Dosieren anderer Zweikomponentenmaterialien wie industrieller Klebstoffe oder weiterer Zweikomponenten-Dentalmaterialien wie Zemente, Füllungswerkstoffe oder Adhäsive.

Die Erfindung wird anhand der Zeichnungen näher erläutert.

Die Zeichnungen zeigen die folgenden Funktionszustände:

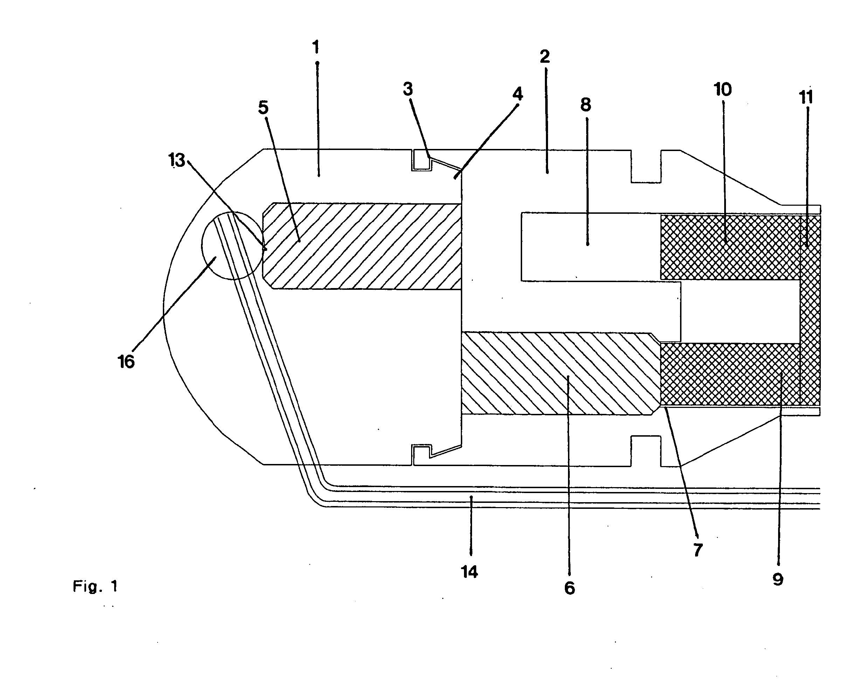

- Fig. 1:: Längsschnitt durch Mischkapsel im Auslieferungszustand,
- Fig. 2:: Längsschnitt durch Mischkapsel im Anmischzustand,

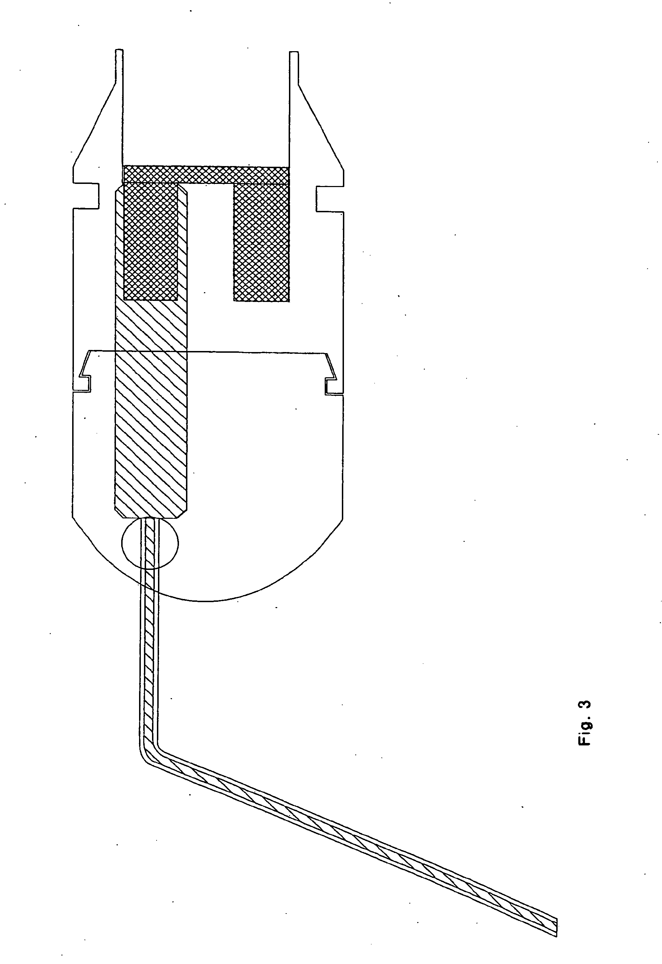

- Fig. 3:: Längsschnitt durch Mischkapsel nach erfolgter Applikation/Dosierung,

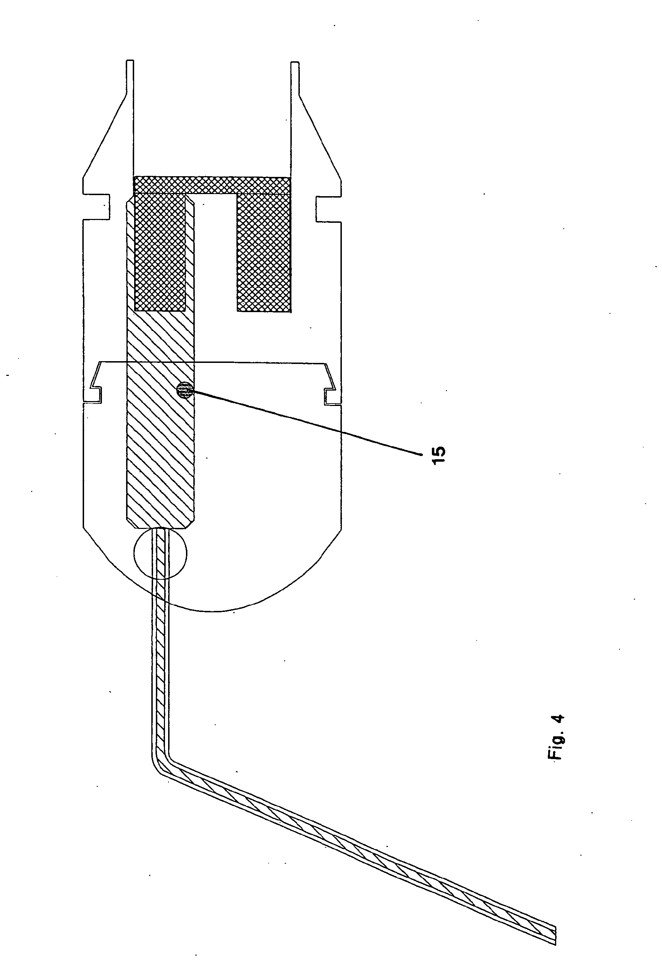

- Fig. 4:: Längsschnitt durch Variante der Mischkapsel mit Mischkugel,

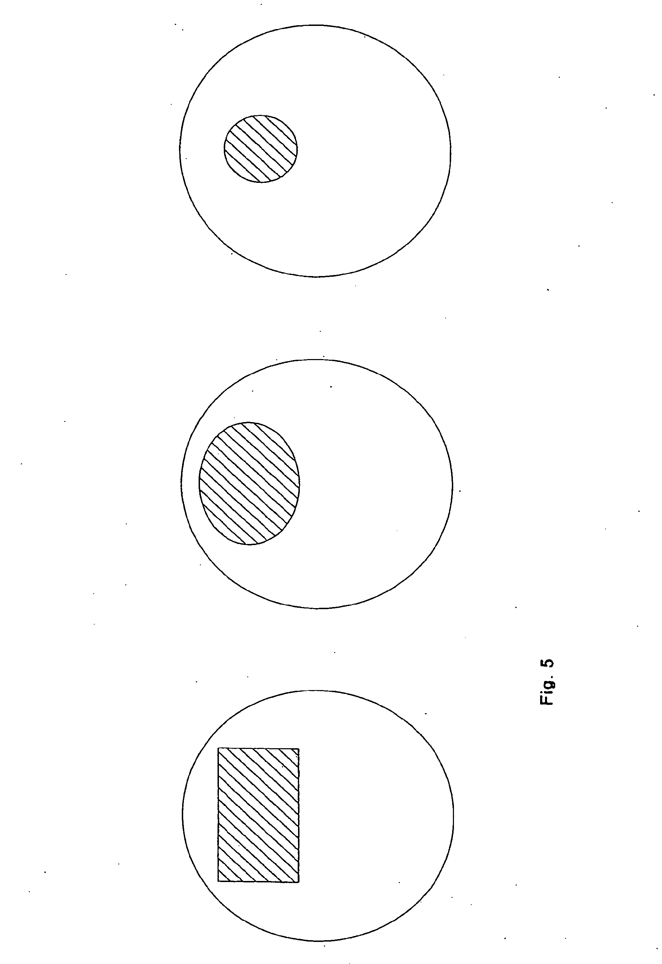

- Fig. 5:: drei beispielhafte Querschnitte der Reservoirs.

In einer beispielhaften Ausgestaltung sind zwei gegeneinander verdrehbare, im Wesentlichen zylindrische erste und zweite Formkörper 1 und 2 über eine Kragenvorrichtung 3 aufsteckbar miteinander an einer gemeinsamen Kreisfläche 4 formschlüssig verbunden. Jeder Formkörper 1, 2 weist eine zur Fläche 4 offene Ausnehmung als erstes Reservoir 5 und zweites Reservoir 6 auf, die zur Aufnahme einer Zementkomponente und gegebenenfalls Mischkugel(n) 15 vorgesehen ist. Der zweite Formkörper 2 weist am der Kreisfläche 4 gegenüberliegenden Ende zwei weitere Ausnehmungen 7 und 8 auf, die zur Aufnahme zweier miteinander über Steg 11 starr verbundener Kolben 9 und 10 vorgesehen sind. Kolben 9 verschließt Ausnehmung 6 am der Kreisfläche 4 gegenüberliegenden Ende. Kolben 10 läuft als Stabilisierung und Schutz gegen Verkantung in Ausnehmung 7.

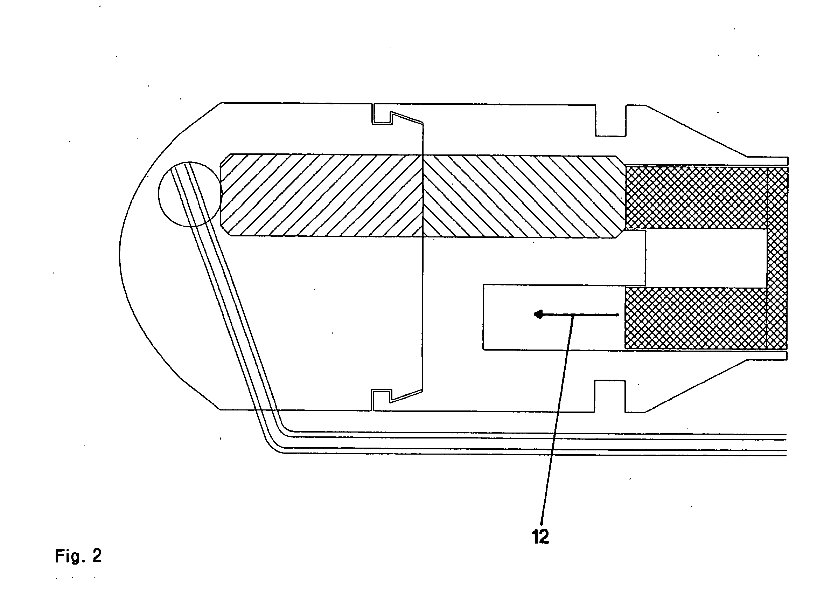

Nach Verdrehen der Formkörper 1 und 2 gegeneinander um 180° entlang der Kreisfläche 4 entsteht die in Fig. 2 gezeigte Situation, und die Reservoirs 5 und 6 bilden einen zusammenhängenden Raum. Nach Mischen durch Schütteln in einem Dentalmischgerät kann durch Bewegung der Kolben in Richtung 12 der Zement ausgepresst werden. Die Auslassöffnung 13 mündet in das proximale Ende einer ausklappbaren Kanüle 14, aus deren distalen Ende das angemischte Material appliziert wird. Im nichtausgeklappten Zustand verschließt ein das proximale Ende der Kanüle 14 umschließendes Kugelgelenkteil 16 die Auslassöffnung 13.

## Patentansprüche

1. Mischkapsel für Zweikomponentenmaterial aufweisend
zwei miteinander an einer gemeinsamen Querschnittsfläche (4) formschlüssig verbundene und
entlang der Querschnittsfläche (4) gegeneinander verdrehbar gelagerte Formkörper (1, 2),
die jeweils eine zur Fläche (4) offene Ausnehmung (5, 6) als Reservoir aufweisen,
die sich senkrecht zur Querschnittsfläche (4) in die Formkörper erstrecken und deren Querschnitte exzentrisch auf der Querschnittsfläche (4) im selben Abstand von Mittelpunkt angeordnet sind,
wobei Reservoirs (5) und (6) zur Aufnahme je einer Komponente eines Zweikomponentenmaterials und gegebenenfalls Mischkugel(n) vorgesehen sind,
wobei das erste Reservoir (5) im ersten Formkörper (1) am der Querschnittsfläche (4) gegenüberliegenden Ende eine Auslassöffnung (13) aufweist,
wobei das zweite Reservoir (6) im zweiten Formkörper (2) am der Querschnittsfläche (4) gegenüberliegenden Ende offen in eine Ausnehmung (7) übergeht, in der ein Auspresskolben (9) formschlüssig beweglich gelagert ist.

2. Gefüllte Mischkapsel für Zweikomponentenmaterial aufweisend zwei miteinander an einer gemeinsamen Querschnittsfläche (4) formschlossig verbundene und
entlang der Querschnittsfläche (4) gegeneinander verdrehbar gelagerte Formkörper (1, 2),
die jeweils eine zur Fläche (4) offene Ausnehmung (5, 6) als Reservoir aufweisen,
die sich senkrecht zur Querschnittsfläche (4) in die Formkörper erstrecken und deren Querschnitte exzentrisch auf der Querschnittsfläche (4) im selben Abstand von Mittelpunkt angeordnet sind,
wobei die Reservoirs (5) und (6) mit je einer Komponente eines Zweikomponentenmaterials befüllt sind,
wobei das erste Reservoir (5) im ersten Formkörper (1) am der Querschnittsfläche (4) gegenüberliegenden Ende eine Auslassöffnung (13) aufweist,
wobei das zweite Reservoir (6) im zweiten Formkörper (2) am der Querschnittsfläche (4) gegenüberliegenden Ende offen in eine Ausnehmung (7) übergeht, in der ein Auspresskolben (9) formschlüssig beweglich gelagert ist,
**dadurch gekennzeichnet, daß** die Komponenten des Zweikomponentenmaterials ohne Lufteinschlüsse vorliegen
und die Vorrichtung ein dosiertes Auspressen von Zementmengen in Mengen um 10 mg erlaubt.

3. Mischkapsel nach einem der Ansprüche 1 und 2, wobei die Formkörper (1) und (2) im Wesentlichen zylindrisch ausgestaltet sind.

4. Mischkapsel nach einem der Ansprüche 1 bis 3, wobei die Formkörper (1) und (2) über eine Kragenvorrichtung (3) aufsteckbar verbunden sind.

5. Mischkapsel nach einem der Ansprüche 1-4, bei der die Auslassöffnung (13) in eine ausklappbare Kanüle (14) mündet.

6. Mischkapsel nach einem der Ansprüche 1-5, bei der im Formkörper (2) am der Querschnittsfläche (4) gegenüberliegenden Ende eine weitere Ausnehmung (8) zur Aufnahme eines über einen Steg (11) starr mit dem Auspresskolben (9) verbundenen Stabilisierungskolben (10) vorgesehen ist.

## Claims

1. A mixing capsule for two-component material, comprising
two shaped bodies (1, 2) which are connected to each other at a common cross-sectional area (4) in a form-locking manner and
are mounted such that they can be pivoted against each other along the cross-sectional area (4),
said shaped bodies (1, 2) each comprising an open recess (5, 6) as a reservoir which is open to the area (4),
said recesses (5, 6) extending into the shaped bodies perpendicular to the cross-sectional area (4) and the cross-sections of said recesses (5, 6) being arranged eccentrically on the cross-sectional area (4) at equal distance from the central point,
wherein the reservoirs (5) and (6) are provided to each receive one component of a two-component material and, where appropriate, mixing ball(s),
wherein the first reservoir (5) in the first shaped body (1) comprises an outlet opening (13) at the end opposite to the cross-sectional area (4), wherein, at the end opposite to the cross-sectional area (4), the second reservoir (6) in the second shaped body (2) openly passes into a recess (7) in which a press-out piston (9) is movably mounted in a form-locking manner.

2. A filled mixing capsule for two-component material, comprising two shaped bodies (1, 2) which are connected to each other at a common cross-sectional area (4) in a form-locking manner and
are mounted such that they can be pivoted against each other along the cross-sectional area (4),
said shaped bodies (1, 2) each comprising an open recess (5, 6) as a reservoir which is open to the area (4),
said recesses (5, 6) extending into the shaped bodies perpendicular to the cross-sectional area (4) and the cross-sections of said recesses (5, 6) being arranged eccentrically on the cross-sectional area (4) at equal distance from the central point,
wherein the reservoirs (5) and (6) are each filled with one component of a two-component material,
wherein the first reservoir (5) in the first shaped body (1) comprises an outlet opening (13) at the end opposite to the cross-sectional area (4), wherein, at the end opposite to the cross-sectional area (4), the second reservoir (6) in the second shaped body (2) openly passes into a recess (7) in which a press-out piston (9) is movably mounted in a form-locking manner, **characterized in that** the components of the two-component material are provided without air inclusions
and the apparatus allows pressing out cement in volumes around 10 mg in a dosed manner.

3. The mixing capsule according to any one of Claims 1 and 2, wherein the shaped bodies (1) and (2) are, in essence, designed cylindrically.

4. The mixing capsule according to any one of Claims 1 to 3, wherein the shaped bodies (1) and (2) are connected via a flange apparatus (3) in a slip-on manner.

5. The mixing capsule according to any one of Claims 1 to 4, wherein the outlet opening (13) ends in a swing-out cannula (14).

6. The mixing capsule according to any one of Claims 1 to 5, wherein a further recess (8) is provided in the shaped body (2) at the end opposite to the cross-sectional area (4), said recess (8) being intended to receive a stabilization piston (10) which is rigidly connected to the press-out piston (9) via a web (11).

## Revendications

1. Capsule mixte pour matériau bicomposant présentant
deux corps moulés (1, 2) reliés ensemble par fermeture géométrique sur une surface transversale commune (4) et
logés le long de la surface transversale (4) de manière à pouvoir tourner l'un contre l'autre,
qui présentent chacun un évidement (5, 6) ouvert vers la surface (4) en tant que réservoir,
évidements qui s'étendent perpendiculairement à la surface transversale (4) dans les corps moulés et dont les coupes transversales sont disposées de manière excentrique sur la surface transversale (4) à la même distance du centre, dans laquelle les réservoirs (5) et (6) sont prévus pour recevoir chacun un composant d'un matériau bicomposant et éventuellement une/des bille(s) mixte(s), dans laquelle le premier réservoir (5) présente une ouverture de sortie (13) dans le premier corps moulé (1) à l'extrémité opposée à la surface transversale (4), dans laquelle le second réservoir (6) se transforme de manière ouverte en un évidement (7) dans le second corps moulé (2) à l'extrémité opposée à la surface transversale (4), dans lequel un piston d'injection (9) est logé de manière mobile par fermeture géométrique.

2. Capsule mixte remplie pour matériau bicomposant présentant deux corps moulés (1, 2) reliés ensemble par fermeture géométrique sur une surface transversale commune (4) et
logés le long de la surface transversale (4) de manière à pouvoir tourner l'un contre l'autre,
qui présentent chacun un évidement (5, 6) ouvert vers la surface (4) en tant que réservoir,
évidements qui s'étendent perpendiculairement à la surface transversale (4) dans les corps moulés et dont les coupes transversales sont disposées de manière excentrique sur la surface transversale (4) à la même distance du centre, dans laquelle les réservoirs (5) et (6) sont remplis avec chacun un composant d'un matériau bicomposant,
dans laquelle le premier réservoir (5) présente une ouverture de sortie (13) dans le premier corps moulé (1) à l'extrémité opposée à la surface transversale (4), dans laquelle le second réservoir (6) se transforme de manière ouverte en un évidement (7) dans le second corps moulé (2) à l'extrémité opposée à la surface transversale (4), dans lequel un piston d'injection (9) est logé de manière mobile par fermeture géométrique,
**caractérisée en ce que** les composants du matériau bicomposant sont présents sans inclusions d'air,
et le dispositif permet une injection dosée de quantités de ciment en des quantités de 10 mg.

3. Capsule mixte selon l'une des revendications 1 et 2, dans laquelle les corps moulés (1) et (2) sont configurés de manière essentiellement cylindrique.

4. Capsule mixte selon l'une des revendications 1 à 3, dans laquelle les corps moulés (1) et (2) sont reliés par le biais d'un dispositif à collet (3) de manière à pouvoir être emboîtés.

5. Capsule mixte selon l'une des revendications 1 à 4, dans laquelle l'ouverture de sortie (13) débouche dans une canule pivotante (14).

6. Capsule mixte selon l'une des revendications 1 à 5, dans laquelle un évidement supplémentaire (8) pour recevoir un piston de stabilisation (10) relié par le biais d'une traverse (11) de manière fixe au piston d'injection (9) est prévu dans le corps moulé (2) à l'extrémité opposée à la surface transversale (4).
